# EUROPEAN PATENT SPECIFICATION

(11) **EP 2 816 127 B1**
(45) Date of publication and mention of the grant of the patent: **15.03.2017**
(21) Application number: 13748511.6
(22) Date of filing: 18.02.2013
(51) Int. Cl.: C22C 37/10, C22C 37/00, F16D 65/12, C22C 33/08

(54) **CAST IRON AND BRAKE PART**
GUSSEISEN UND BREMSTEIL
FONTE ET PIÈCE DE FREIN

(30) Priority: 17.02.2012 JP 2012033212
(43) Date of publication of application: 24.12.2014
(73) Proprietor: Honda Motor Co., Ltd., Minato-ku, Tokyo 107-8556 (JP); Kabushiki Kaisha Riken, Chiyoda-ku, Tokyo 102-8202 (JP)
(72) Inventor: WATANABE, Hiroyuki, Wako-shi, Saitama 351-0193 (JP); SHINKAWA, Masaki, Wako-shi, Saitama 351-0193 (JP); TYOU, Mojin, Kashiwazaki, Nilgata 945-8555 (JP); SUBAGIJO, Kastria, Kashiwazaki, Nilgata 945-8555 (JP)
(74) Representative: Weickmann & Weickmann PartmbB
(86) International application number: PCT/JP2013/053832
(87) International publication number: WO 2013/122248

(56) References cited:
- DE-A1- 19 751 279
- JP-A- H1 163 045
- JP-A- S5 154 821
- JP-A- S5 154 821
- JP-A- H03 291 354
- JP-A- H05 125 480
- JP-A- H05 125 480
- JP-A- H05 214 480
- JP-A- S63 277 740
- SU-A1- 1 014 957
- SU-A1- 1 320 255
- US-A- 2 809 888
- US-A- 4 859 414

## Description

### Technical Field

The present invention relates to a cast iron and to a brake part suitably used in a brake apparatus in a vehicle, etc., and in particular, relates to a technique in which a brake disk is reduced in weight by making a material having a high specific heat.

### Background Art

The brake apparatus in an automobile, a motorcycle, etc., has a brake disk that rotates with a wheel and a brake pad that is pressed to the brake disk. The brake disk is required to have a high thermal conductivity in order to prevent loss of function due to frictional heat. As a material that can realize such a requirement at low cost, flake graphite cast iron, CV graphitic cast iron, and spherical graphite cast iron have been used up to now. In particular, in the flake graphite cast iron, thermal conductivity can be improved by increasing graphite length, since graphite is a good conductor of heat.

With respect to the cast iron, the following are known. Patent Publication 1 discloses a corrosion-resistant cast iron, consisting of, by mass %, 2.8 to 4 % of C, 1.5 to 3.0 % of Si, 0.3 to 1.2 % ofMn, 0.2 % or less of P, 0.06 to 0.25 % of S, 0.15 to 3.5 % of Cu, and the balance of Fe and inevitable impurities in the overall composition, in which carbon equivalent is in a range of 3.8 to 4.5 %. Rust is prevented by adjusting the Cu content.

Patent Publication 2 discloses a disk for a disk brake, consisting of, by mass %, 2.8 to 3.8 % of C, 1.8 to 3.4 % of Si, 0.5 to 1.0 % of Mn, 0.02 to 0.1 % of S, 0.1 to 1.5 % of Cr, 0.1 to 1.0 % of Mo, 0.1 to 1.2 % ofNi, 0.01 to 0.05 % of Ce, 0.1 to 1.2 % of Cu, and the balance of Fe and inevitable impurities in the overall composition. Heat crack resistance is improved by strengthening using Ce.

Patent Publication 3 discloses an integral type brake part which is made of cast iron using a single molten metal and has a sliding portion and a hub mounting portion, consisting of, by mass %, 3.5 to 3.90 % of C, 2.3 to 3.0 % of Si, 0.7 to 1.1 % ofMn, not more than 0.05 % of P, 0.08 to 0.012 % of S, 0.7 to 1.2 % of Cu, and the balance of Fe and inevitable impurities in the overall composition. In the brake part, the CE value is 4.3 to 4.7, tensile strength is 15 to 20 kgf/mm², and damping capacity is 1.2 to 2.0 x10⁻². An inner surface of a hub mounting hole is subjected to high-frequency hardening, so that hardness HRB is 90 to 105.

Patent Publication 4 discloses a high thermal conductive corrosion-resistant cast iron, consisting of, by mass %, 3 to 4.5 % of C, 1.5 to 3.0 % ofSi, 0.5 to 1.5 % of Mn, 0.2 % or less of P, 0.06 to 0.25 % of S, 0.15 to 3.5 % of Cu, 0.02 to 0.1 % of Ca, 0.02 to 0.1 % of Al, and the balance of Fe and inevitable impurities in the overall composition, in which the carbon equivalent is in a range of 4 to 5 %. The high thermal conductivity and corrosion resistance are improved by forming acicular graphite in a matrix structure

Patent Publication 5 discloses a cast iron with improved vibration damping capacity and a matrix structure being 80% pearlite.

Patent Publication 1 is Japanese Unexamined Patent Application Publication No. Sho59-011653. Patent Publication 2 is Japanese Unexamined Patent Application Publication No. 2002-105581. Patent Publication 3 is Japanese Unexamined Patent Application Publication No. Hei05-214480. Patent Publication 4 is Japanese Unexamined Patent Application Publication No. Hei07-3380.

Patent Publication 5 is Japanese Unexamined Patent Publication No Sho51-54821.

### DISCLOSURE OF THE INVENTION

### PROBLEMS SOLVED BY THE INVENTION

Recently, transport device in vehicles such as automobiles, etc., are desired to be lighter in weight in view of emission controls for greenhouse gases, and in particular, the brake disk is desired to be decreased in weight since it is a relatively heavy product made of cast iron. Braking by using the brake disk and the brake pads is carried out by conversion of kinetic energy into thermal energy, and the thermal energy is absorbed by the brake disk and is dissipated after stopping. When the thermal conductivity of the brake disk is high, the thermal energy can be quickly dissipated. In addition, when the specific heat of the brake disk is high, ability for storing the thermal energy is high and temperature in absorbing the thermal energy can be prevented from increasing. Therefore, when the specific heat of the brake disk is high, the brake disk can be made smaller.

However, a cast iron in which the specific heat is increased, has not been developed at the present time. Therefore, the present invention was completed in view of the above-described circumstances, and an object of the present invention is to provide a cast iron and a brake part that can be decreased in weight by having a high specific heat.

### MEANS FOR SOLVING THE PROBLEMS

The inventors have conducted various research with regard to decreasing the weight of a brake disk, and consequently, they have found that the specific heat of not less than 600 J/kg/K is required in order to obtain an effect for emission control of greenhouse gases. Then, the inventors further conducted various research in order to obtain such a specific heat.

The cast iron consists of ferrite, cementite, graphite, and other inclusions in small amount. With respect to the ferrite in which weight fraction is the highest thereof, the increasing of the specific heat was researched. Various elements that can be dissolved in the ferrite and have an effect of improving the specific heat were researched. As a result, Si was found to have the greatest effect, and it was easily dissolved in the ferrite without forming a carbide thereof.

The effect of Si is remarkably exerted when Si is added at not less than 3.5 % to the cast iron. In the cast iron, Si is mainly concentrated in the ferrite, and the weight fraction in the ferrite is not less than 4%. In the case in which the Si content is the above, it is said that Fe₃Si is deposited in an equilibrium state. However, as a result of X-ray diffraction analysis, Fe₃Si is nearly undetectable under usual production conditions. That is, it is thought that the specific heat of the ferrite is improved by Si being irregularly dissolved in a supersaturated state without forming an ordered structure.

The cast iron according to the present invention is defined in the claims and was completed based on the above knowledge.

In the following, grounds of numerical limitation in the present invention will be explained with the effects of the present invention. Here, in the following explanation, "%" means "mass %".

### C: 3.0 to 4.8 %

C is an element that contains to deposit graphite in the matrix structure. The graphite is a good conductor of heat, and has effects in which the thermal conductivity of the cast iron is increased and absorbed thermal energy is rapidly dissipated. When the C content is less than 3.0 %, it is difficult to obtain thermal conductivity of 44 W/m/K, which is the same as that of a conventional product. In contrast, when the C content exceeds 4.8 %, the melting point of the cast iron is excessively increased, and as a result, the cast iron is difficult to melt and the strength is remarkably decreased. Therefore, the C content is set to be 3.0 to 4.8 %.

### Si: 3.5 to 5.0 %

Si is an element that is contained to increase the specific heat of the cast iron. When the Si content is less than 3.5 %, it is difficult to obtain the specific heat of 600 J/kg/K, which is in a range of the present invention. In contrast, when the Si content exceeds 5 %, the viscosity of the molten metal is increased and casting is difficult to carry out. Therefore, the Si content is set to be 3.5 to 5.0%.

### Mn: 0.5 to 2.0 %.

Mn is an element that is contained in scrap raw material, and it has an effect of strengthening the matrix structure. When the Mn content is less than 0.5 %, the above effect is decreased. In contrast, when the Mn content of exceeds 2 %, chill crystal is remarkably formed in the matrix structure, and machinability is decreased. Therefore, the Mn content is set to be 0.5 to 2.0 %.

### P: 0.2 % or less

P is an element that improves fluidity of molten metal, but causes embrittlement of the cast iron. Therefore, it is desirable that the content of P as an inevitable impurity be set to be 0.2 % or less.

### Cu: 0.3 to 1.5 %

In the present invention, Si is added in order to increase the specific heat; however, Si has an effect of promoting the formation of ferrite. When ratio of the ferrite is increased, strength or wear resistance is decreased. Therefore, in the present invention, Cu is an essential alloy element. Cu promotes the formation of pearlite in the matrix structure and improves the strength. Furthermore, it flattens the graphite, and the thermal conductivity is increased. When the Cu content is less than 0.3 %, the above effects are decreased. In contrast, when the Cu content exceeds 1.5 %, the pearlite in the matrix structure is finely formed and machinability is reduced. Therefore, the Cu content is set to be 0.3 to 1.5 %. It is more desirable that the Cu content be set to be 0.5 to 1.5 %.

### S: 0.25 % or less

When the S content exceeds 0.25 %, formation of carbide is increased by excessive formation of MnS, and machinability is reduced. Therefore, it is desirable that the content of S as an inevitable impurity be set to be 0.25 % or less.

Alloy elements such as Ni, Cr, Mo, V, Sn, can be contained in small amounts in order to improve the matrix structure or characteristics of the cast iron.

### Ni: more than 0 % and not more than 1.2 %

Ni is an element that promotes graphitization, and it improves the machinability by preventing formation of chill crystal. In addition, it has an effect that improves the strength of the matrix structure. However, Ni should not be added in a large amount because it is very expensive. It is desirable that the Ni content be set to be more than 0% and not less than 1.2 %, in order to balance both effects and cost.

### Cr: more than 0 % and not more than 1.5 %

Cr is an element by which strength is improved by stabilizing the carbide and finely forming the matrix structure, and it is desirable that it be contained. In addition, Cr is difficult to dissolve in ferrite and forms the carbide, and contribution to improvement of the specific heat is small. Therefore, it is desirable that the Cr content be set to be more than 0 % and not more than 1.5 %.

### Mo: more than 0 % and not more than 1.0 %

Mo is an element by which strength is improved by stabilizing the carbide and finely forming the matrix structure, and it is desirable that it be contained in order to yield the above effect. In addition, Mo is difficult to dissolve in ferrite and forms the carbide, and contribution to improvement of the specific heat is small. Therefore, it is desirable that the Mo content be set to be more than 0 % and not more than 1.0 %.

### V: more than 0 % and not more than 0.35 %

V is an element by which strength is improved by stabilizing the carbide and finely forming the matrix structure, and it is desirable that it be contained in order to yield the above effect. In addition, V is difficult to dissolve in ferrite and forms the carbide, and the contribution to improvement of the specific heat is small. Therefore, it is desirable that the V content be set to be more than 0 % and not more than 0.35 %.

### Sn: more than 0 % and not more than 0.2 %

Sn is an element by which the strength is improved by stabilizing the carbide and finely forming the matrix structure, and it may be contained in order to yield the above effects. In addition, when the Sn content exceeds 0.2 %, toughness for heat cracking is decreased. Therefore, it is desirable that the Sn content be set to be more than 0 % and not more than 0.2 %, in order to obtain the above effect.

As described above, it is necessary that the specific heat be 600 J/kg/K in order to obtain a sufficient effect of decrease in weight of the brake disk. Here, in an automobile which repeatedly accelerates and brakes, that the specific heat at 200°C should not be less than 600 J/kg/K, since an average temperature of the brake disk is about 200°C. In addition, in the present invention, the thermal conductivity at 200°C is not less than 44 W/m/K. Consequently, the absorbed thermal energy is rapidly dissipated, and generation of the heat cracking in the brake disk is prevented.

The present invention can be applied to any of flake graphite cast iron, or CV graphitic cast iron. A spherical graphite cast iron has a high tensile strength since graphite has a spherical shape; however, the thermal conductivity is insufficient. Therefore, the cast iron of the invention is a flake graphite cast iron in which the thermal conductivity is high or a CV graphitic cast iron in which the thermal conductivity and the tensile strength are balanced, and moreover, the flake graphite cast iron is desirable as long as a low tensile strength is acceptable. In addition, in the present invention, the area ratio of pearlite in the matrix structure is not less than 90%, and as a result, sufficient strength can be secured.

According to the present invention, an improving effect of a specific heat of Si, which was not known until now, was found, and the high specific heat can be imparted to the cast iron by containing 3.5 to 5.0 % of Si. As a result, temperature increasing on a slide portion due to friction heat can be prevented, since a heat capacity may be improved even if it has the same weight. Therefore, service life can be improved by decreasing thermal expansion, decreasing heat cracking, decreasing thermal degradation, etc. In addition, the thermal load of the brake pads can be decreased by lowering temperature of the brake pads, which are counterparts, and therefore, the brake pads can be produced by inexpensive material. Furthermore, brake parts can be decreased in weight since the brake pads can be decreased in weight up to the same heat capacity.

### BRIEF DESCRIPTION OF THE DRAWINGS

Fig. 1 is a graph showing the relationship of Si content and specific heat in an embodiment of the present invention.
Fig. 2 is a graph showing the relationship of Cu content and pearlite ratio in an embodiment of the present invention.
Fig. 3 is a graph showing the relationship of C content and thermal conductivity in an embodiment of the present invention.
Fig. 4 is a graph showing the relationship of time and temperature in braking of a brake disk.

### EXAMPLES

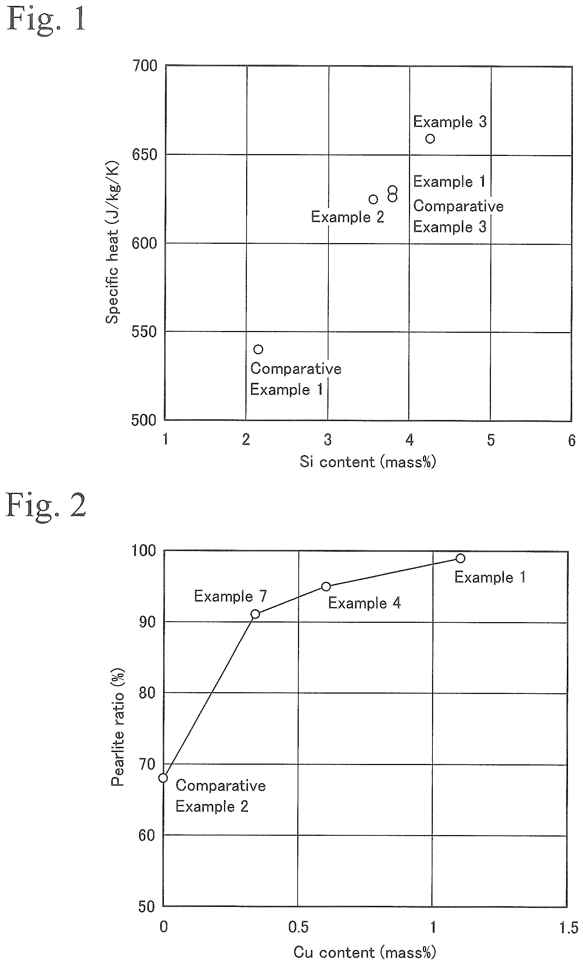

Cast iron samples having a chemical composition shown in Table 1 were experimentally produced in order to test effects of chemical compositions and matrix structures. With respect to each cast iron sample, specific heats, pearlite ratios, and thermal conductivities were measured, and measured results are shown in Table 1. In addition, whether or not there were defects in casting of each of the cast iron sample was noted, and the observed results are also shown in Table 1. Examples 1 to 7 have chemical compositions that are in the range of the present invention, and Comparative Example 1 is FC250, which is an example of a conventional product. In Comparative Examples 1 to 5, underlines indicated chemical compositions that are outside the range of the present invention. Furthermore, the underlines also indicate the specific heats, the thermal conductivities, and the pearlite ratios that are outside the range of the present invention. Figs. 1 to 4 are graphs of the results in Table 1.

**Table 1**

| | Chemical Compositions (Ladle Values, mass%) | | | | | | Specific Heats J/kg/K | Thermal Conductivities W/m/K | Pearlite Ratios % | Casting Defects |
|---|---|---|---|---|---|---|---|---|---|---|
| | C | Si | Mn | P | S | Cu | | | | |
| Example 1 | 3.45 | 3.79 | 1 | 0.035 | 0.009 | 1.1 | 631 | 57 | 99 | none |
| Example 2 | 3.21 | 3.65 | 0.97 | 0.04 | 0.017 | 1.0 | 625 | 48 | 99 | none |
| Example 3 | 3.11 | 4.26 | 1 | 0.004 | 0.009 | 1.0 | 659 | 45 | 99 | none |
| Example 4 | 3.45 | 3.79 | 1 | 0.035 | 0.009 | 0.6 | 633 | 50 | 95 | none |
| Example 5 | 3.45 | 4.85 | 1 | 0.035 | 0.009 | 0.6 | 685 | 50 | 95 | none |
| Example 6 | 3.21 | 3.88 | 1 | 0.035 | 0.009 | 0.6 | 630 | 45 | 99 | none |
| Example 7 | 3.42 | 3.83 | 1 | 0.032 | 0.11 | 0.3 | 628 | 49 | 91 | none |
| Comparative Example 1 | 3.01 | 2.15 | 0.7 | 0.03 | 0.05 | 0.8 | 540 | 44 | 99 | none |
| Comparative Example 2 | 3.45 | 3.79 | 1 | 0.035 | 0.009 | 0 | 631 | 50 | 68 | none |
| Comparative Example 3 | 2.69 | 3.79 | 1 | 0.035 | 0.009 | 1.1 | 629 | 40 | 99 | none |
| Comparative Example 4 | 3.45 | 5.51 | 1 | 0.035 | 0.009 | 0.6 | 730 | 55 | 95 | yes |
| Comparative Example 5 | 3.45 | 3.01 | 1 | 0.037 | 0.009 | 1.0 | 592 | 51 | 99 | none |

As is apparent from Table 1, in Examples 1 to 7 of the present invention, higher specific heats and higher thermal conductivities were obtained than those of Comparative Example 1 (conventional product), and pearlite ratios were similar to that of Comparative Example 1.

In Comparative Example 1, the specific heat was a low value since Si content was below 3.5 %. It was necessary for the Si content to be 3.5 % or more in order to obtain the specific heat of 600 J/kg/K or more, as shown in Fig. 1.

In Comparative Example 2, C content and Si content were set to be the same as those of Example 1, and the Cu content was set to be zero. Therefore, the pearlite ratio was drastically lower than in Examples 1 to 7. It was necessary for the Cu content to be 0.3 % or more in order to obtain the pearlite ratio of 90 % or more, as shown in Fig. 2.

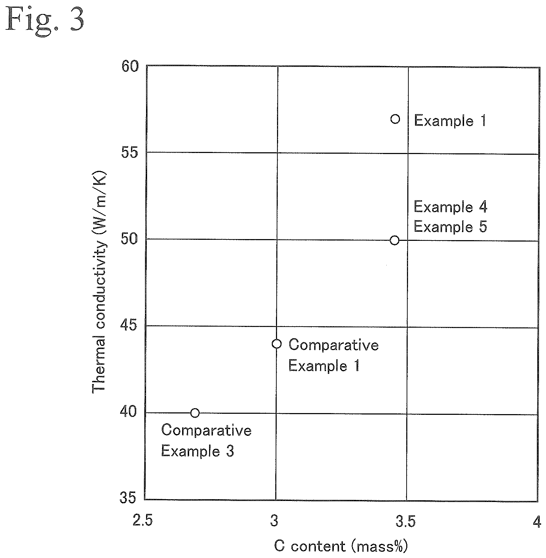

In Comparative Example 3, the Si content was set to be the same as that of Example 1, and the C content was set to be less than 3.0 %. In Comparative Example 3, the thermal conductivity was very low because the C content was less than 3.0 %. It was necessary for the C content to be 3.0 % or more in order to obtain the thermal conductivity of 44 W/m/K or more, as shown in Fig. 3.

In Comparative Example 4, the C content was set to be the same as that of Example 1, and the Si content was set to be more than 5.0 %. In Comparative Example 4, since the specific heat was very high but viscosity of molten metal was high, casting defect was observed, as shown in Table 1.

In Comparative Example 5, the Si content was set to be lower by about 0.8 % than that of Example 1. The specific heat was higher than that of the Comparative Example 1, but was less than 600 J/kg/K.

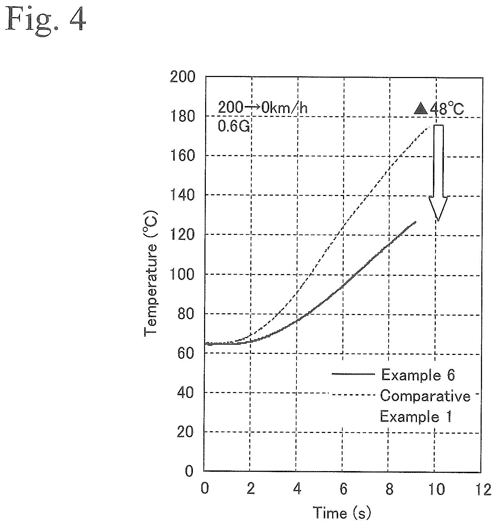

Brake disks having the same shape and the same size were produced by cast iron samples of Example 6, and Comparative Example 1 and were mounted in an automobile. Then, the automobile was decelerated from 200 km/h to 0 km/h by the brake disk at 0.6G. Temperature changes of brake pads in this decelerating are shown in Fig. 4. The temperature of the brake pads used for the brake disk of Example 6 was drastically decreased in comparison with that of the Comparative Example 1. That is, in the Example 6, absorption of thermal energy was increased by improving the specific heat, and the temperature of the brake disk was not increased. Therefore, according to the present invention, service life of the brake pads can be extended, and the brake pads can be produced from inexpensive materials, and moreover, the brake disk can be decreased in weight as the specific heat of the brake disk is improved.

The present invention is not limited to brake parts in a disk shape, and it can be applied to brake parts in a freely selected shape, such as a cylindrical shape, a long tabular shape, etc.

### Industrial Applicability

The present invention can be applied to various brake apparatus such as a brake for transport devices in automobiles, motorcycles, train, etc., a brake for machineries of press machines, etc., and the like.

## Claims

1. A cast iron consisting of, by mass %, 3.0 to 4.8 % of C, 3.5 to 5.0 % of Si, 0.5 to 2.0 % of Mn, 0.3 to 1.5 % of Cu, 0.2 % or less of P, 0.25 % or less of S, optionally, more than 0 % and 1.2 % or less ofNi, more than 0 % and 1.5 % or less of Cr, more than 0 % and 1.0 % or less of Mo, more than 0 % and 0.35 % or less of V, more than 0 % and 0.2 % or less of Sn, and the balance of Fe and inevitable impurities in the overall composition, wherein
the cast iron is flake graphite cast iron or CV graphite cast iron,
specific heat at 200°C is not less than 600 J/kg/K,
thermal conductivity at 200°C is not less than 44 W/m/K, and
an area ratio of pearlite in a matrix structure is not less than 90 %.

2. A brake part produced using the cast iron according to claim 1.

## Patentansprüche

1. Gusseisen, bestehend aus, in Massen-%, 3,0 bis 4,8 % C, 3,5 bis 5,0 % Si, 0,5 bis 2,0 % Mn, 0,3 bis 1,5 % Cu, 0,2 % oder weniger P, 0,25 % oder weniger S, gegebenenfalls mehr als 0 % und 1,2 % oder weniger Ni, mehr als 0 % und 1,5 % oder weniger Cr, mehr als 0 % und 1,0 % oder weniger Mo, mehr als 0 % und 0,35 % oder weniger V, mehr als 0 % und 0,2 % oder weniger Sn, und wobei der Rest Fe und unvermeidbare Verunreinigungen in der Gesamtzusammensetzung sind, wobei
das Gusseisen Gusseisen mit Lamellengraphit oder Gusseisen mit CV-Graphit ist,
die spezifische Wärme bei 200°C nicht weniger als 600 J/kg/K ist,
die Wärmeleitfähigkeit bei 200°C nicht weniger als 44 W/m/K ist, und
ein Flächenverhältnis von Perlit in einer Matrixstruktur nicht weniger als 90 % ist.

2. Bremsteil, hergestellt unter Verwendung des Gusseisens nach Anspruch 1.

## Revendications

1. Fonte constituée, en % en masse, de 3,0 à 4,8 % de C, 3,5 à 5,0 % de Si, 0,5 à 2,0 % de Mn, 0,3 à 1,5 % de Cu, 0,2 % ou moins de P, 0,25 % ou moins de S, éventuellement, plus de 0 % et 1,2 % ou moins de Ni, plus de 0 % et 1,5 % ou moins de Cr, plus de 0 % et 1,0 % ou moins de Mo, plus de 0 % et 0,35 % ou moins de V, plus de 0 % et 0,2 % ou moins de Sn, et le reste de Fe et d'impuretés inévitables dans la composition globale, dans laquelle
la fonte est de la fonte à graphite lamellaire ou de la fonte à graphite CV,
la chaleur spécifique à 200 °C n'est pas inférieure à 600 J/kg/K,
la conductivité thermique à 200 °C n'est pas inférieure à 44 W/m/K, et
un rapport de surface de perlite dans une structure matricielle n'est pas inférieur à 90%.

2. Pièce de frein produite en utilisant la fonte selon la revendication 1.
